# EUROPÄISCHE PATENTSCHRIFT

(11) **EP 2 694 856 B1**
(45) Veröffentlichungstag und Bekanntmachung des Hinweises auf die Patenterteilung: **06.02.2019**
(21) Anmeldenummer: 12714610.8
(22) Anmeldetag: 30.03.2012
(51) Int. Cl.: F16L 19/028, F16L 19/06, F16L 19/02, F16L 19/12

(54) **HOCHDRUCKFESTE VERSCHRAUBUNG FÜR ROHR- ODER SCHLAUCHLEITUNGEN MIT EINEM KEGELGEWINDE**
HIGH PRESSURE-RESISTANT SCREW CONNECTION FOR PIPELINES OR HOSE LINES HAVING A TAPERED THREAD
SYSTÈME DE VISSAGE RÉSISTANT À DE HAUTES PRESSIONS, DESTINÉ À DES TUBES OU DES TUYAUX DOTÉS D'UN FILET CONIQUE

(30) Priorität: 01.04.2011 DE 102011015895
(43) Veröffentlichungstag der Anmeldung: 12.02.2014
(73) Patentinhaber: Parker Hannifin Manufacturing Germany GmbH & Co. KG, 33659 Bielefeld (DE)
(72) Erfinder: SCHIPPERS, Carsten, 33334 Gütersloh (DE); MÜLLER, Thomas, 33334 Gütersloh (DE); NEISKE, Oliver, 33415 Verl (DE); UDHÖFER, Andreas, 33334 Gütersloh (DE)
(74) Vertreter: Feucker, Max Martin
(86) Internationale Anmeldenummer: PCT/EP2012/055817
(87) Internationale Veröffentlichungsnummer: WO 2012/131049

(56) Entgegenhaltungen:
- EP-A1- 2 184 525
- WO-A1-2008/057983
- DE-A1- 3 709 819
- DE-A1-102005 054 402
- DK-B- 112 060

## Beschreibung

Die Erfindung betrifft eine Verbindungsvorrichtung für Rohr- oder Schlauchleitungen mit einem eine Bohrung zur Durchleitung eines die Rohr- oder Schlauchleitung durchströmenden Mediums aufweisenden Verschraubungskörper und mit einem in eine am vorderen Ende des Verschraubungskörpers ausgebildete Aufnahme einsteckbaren und darin mittels einer ein auf ein auf dem Außenumfang des Verschraubungskörpers angebrachtes Außengewinde aufschraubbares Innengewinde aufweisenden und zwischen einer Lösestellung und einer Montagestellung verdrehbar angeordneten Überwurfmutter festlegbaren rohrähnlichen Endstück, wobei die Aufnahme des Verschraubungskörpers in Form eines sich erweiternden Konus ausgebildet ist, und wobei die das Außengewinde tragende Umfangsfläche des Verschraubungskörpers in Richtung ihres vorderen Endes einen zum Konus der Aufnahme entgegengesetzten geneigten Verlauf und die Überwurfmutter mit ihrer das Innengewinde tragenden Fläche einen dazu komplementären Verlauf aufweisen und Außengewinde und Innengewinde als Kegelspitzgewinde ausgebildet sind derart, dass der bei montierter Verbindungsvorrichtung von dem konischen Endstück auf den im Verschraubungskörper ausgebildeten Aufnahmekonus ausgeübten Radialkraft eine bei aufgeschraubter Überwurfmutter vom Kegelgewinde ausgehende Radialkraft entgegengerichtet ist.

Eine Verbindungsrichtung mit den vorgenannten, gattungsgemäßen Merkmalen ist aus der WO 2008/057983 bekannt. Bei der bekannten Verbindungsvorrichtung ist das in den am Verschraubungskörper ausgebildeten Aufnahmekonus einzusteckende Endstück beziehungsweise Rohr zylindrisch ausgebildet, wobei auf dem äußeren Umfang des in den Aufnahmekonus eingesteckten Endstücks beziehungsweise Rohres ein Schneidring angeordnet ist, der auf seinem äußeren Umfang eine konische Anlagefläche für den damit korrespondierenden Aufnahmekonus des Verschraubungskörpers ausbildet. Die über das Rohr geschobene und auf das Außengewinde des Verschraubungskörpers geschraubte Überwurfmutter stützt sich innenseitig an dem Schneidring ab und schiebt beziehungsweise presst diesen gegen die innere Umfangsfläche des Aufnahmekonus; gleichzeitig gräbt sich eine an dem das Endstück beziehungsweise das Rohr umgreifenden Innenumfang des Schneidringes ausgebildete Verzahnung in die Wandung des Endstücks beziehungsweise des Rohres ein und legt dieses somit in dem Aufnahmekonus des Verschraubungskörpers fest. Bei einigen Ausführungsbeispielen der bekannten Verbindungsvorrichtung sind Innengewinde der Überwurfmutter und Außengewinde des Verschraubungskörpers als Kegelgewinde ausgebildet. Zum Lösen der Verbindung wird die Überwurfmutter losgedreht, so dass das Endstück bzw. das Rohr mit dem daran durch Eingraben seiner Verzahnung fixierten Schneidring aus dem Aufnahmekonus des Verschraubungskörpers herausgezogen werden kann.

Eine vergleichbare, ähnlich aufgebaute Verbindungsvorrichtung ergibt sich aus der DK-B-112060.

Die Ausbildung des in den Verschraubungskörper einer Verbindungsvorrichtung einsteckbaren Endstücks beziehungsweise Rohres mit einer eine Abstützfläche für die Überwurfmutter ausbildenden, durch Umformung hergestellten Rohrwulst ist aus der EP 2 184 525 A1 bekannt.

Mit der bekannten Verbindungsvorrichtung ist noch der Nachteil verbunden, dass die Handhabung des in die bekannte Verbindungsvorrichtung einzusetzenden Schneidringes umständlich ist, wobei der Schneidring die Ausführung einer Wiederholmontage zumindest erschwert. Da bei dem Einsatz eines Kegelgewindes die Gewindesteigung entsprechend groß und die Länge der ineinander greifenden Gewindeabschnitte entsprechend kurz bemessen ist, ist bei der Ausführung von Wiederholmontagen nicht gewährleistet, dass die Überwurfmutter zum Ausgleich von Setzerscheinungen und von Toleranzen bei der Fertigung des Gewindes um ein gewisses Maß weiter auf den Verschraubungskörper aufgeschraubt werden kann.

Der Erfindung liegt daher die Aufgabe zugrunde, bei einer gattungsgemäßen Verbindungsvorrichtung die vorgenannten Nachteile nach Möglichkeit zu vermeiden und die Handhabbarkeit und die Wiederholmontage bei der bekannten Verbindungsvorrichtung zu verbessern.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor, dass an der in die Aufnahme eingreifenden Umfangsfläche des Endstücks eine dem am Verschraubungskörper ausgebildeten Aufnahmekonus entsprechende, sich zum Ende des Endstücks verengende konische Gestaltung eingerichtet ist und die vordere, von dem Aufnahmekonus des Verschraubungskörpers aufgenommene konische Umfangsfläche an einer durch Umformung des Endstücks beziehungsweise des Rohres hergestellten Wulst ausgebildet ist und dass die Geometrie der Zahnflanken des Kegelgewindes derart ausgelegt ist, dass bei Erreichen einer durch ein vorgegebenes Anzugsdrehmoment definierten Montagestellung der Überwurfmutter auf dem Verschraubungskörper bei der Erstmontage zwischen den in Aufschraubrichtung gelegenen Zahnflanken von Außengewinde und Innengewinde sowie in dem jeweiligen Gewindeganggrund jeweils ein Spalt als Nachziehreserve des Kegelspitzgewindes verbleibt, wobei das dem Endmontagezustand der Verbindungsvorrichtung definierte Anzugsdrehmoment derart eingestellt ist, dass der zwischen dem inneren Aufnahmekonus und der äußeren das Außengewinde tragenden Fläche liegende Endabschnitt des Verschraubungskörpers elastisch nach innen in Richtung auf das in den Aufnahmekonus eingeschobene Endstück vorgespannt ist, die Gewindegänge des am Verschraubungskörper angebrachten Außengewindes und des in der Überwurfmutter ausgebildeten Innengewindes einen unterschiedlichen Öffnungswinkel ihrer Zahnflanken aufweisen.

Mit der Erfindung ist zunächst auch der Vorteil eines Überlastungsschutzes gegen eine Übermontage der Verbindungsvorrichtung verbunden. Gleichzeitig bildet der bei der Erstmontage verbleibende Spalt die angesprochene Nachziehreserve, die im Anschluss an eine Erstmontage das Aufschrauben der Überwurfmutter um ein weiteres Maß weiter auf den Verschraubungskörper ermöglicht. Damit sich die Überwurfmutter bei montierter Verbindungsvorrichtung nicht unbeabsichtigt löst, darf das Losdrehmoment nicht zu klein sein. Sofern nicht eine zusätzliche Sicherung im Wege der Einrichtung einer Selbsthemmung des Kegelgewindes vorgesehen ist, ist der Flankenwinkel des Kegelgewindes so zu wählen, dass mindestens 60 % des Anzugsdrehmomentes erforderlich sind, um die Verbindungsvorrichtung durch Drehung der Überwurfmutter entgegen der Anzugsdrehrichtung wieder zu lösen.

Wählt man beispielsweise gemäß einem Ausführungsbeispiel der Erfindung für die

Zahnflanken der Gewindegänge an der Überwurfmutter einen größeren Öffnungswinkel als im Bereich des Verschraubungskörpers, so bewirkt dies eine Klemmung des auslaufenden Gewindes an dem vorderen Ende des Verschraubungskörpers in der Überwurfmutter, da hier die unterschiedlichen Öffnungswinkel ineinanderstoßen. Die weiteren Gewindegänge im hinteren Verlauf des Gewindes bleiben ohne Berührung.

Eine Selbsthemmung des Kegelgewindes vor Erreichen eines Blockmontagezustandes wird dadurch erreicht, dass das dem Endmontagezustand der Verbindungsvorrichtung definierte Anzugsdrehmoment derart eingestellt ist, dass der zwischen dem inneren Aufnahmekonus und der äußeren das Außengewinde tragenden Umfangsfläche liegende Endabschnitt des Verschraubungskörpers elastisch nach innen in Richtung auf das in den Aufnahmekonus eingeschobene Endstück vorgespannt ist. Hierbei wird das empfohlene Drehmoment für das Erreichen der Endmontagestellung der Verbindungsvorrichtung so gewählt, dass bei Ineinanderlaufen der unterschiedlichen Öffnungswinkel der Gewindegänge der offene Endabschnitt des Verschraubungskörpers in seinem Durchmesser leicht reduziert, also elastisch nach innen gedrückt wird. Auf seiner Innenseite erfährt der Endabschnitt dabei eine Abstützung durch das in den Aufnahmekonus eingeschobene, ebenfalls konische Ende des Endstücks. Hierdurch wird eine Selbsthemmung in Form eines umlaufenden Keils zwischen dem Endstück und der Überwurfmutter erzeugt, wodurch das Losdrehmoment der Verbindungsvorrichtung erhöht wird.

Im Hinblick auf eine Verbesserung der Abdichtung zwischen Endstück und Verschraubungskörper ist nach einem Ausführungsbeispiel der Erfindung vorgesehen, dass in der den konischen Bereich des Endstücks aufnehmenden Innenfläche des Aufnahmekonus des Verschraubungskörpers eine Nut mit einer darin angeordneten Dichtung ausgebildet ist.

In der Zeichnung sind Ausführungsbeispiele der Erfindung wiedergegeben, welche nachstehend beschrieben sind. Es zeigen:
- Fig. 1: eine Verbindungsvorrichtung mit einem Verbindungskörper und einem darin eingesteckten Endstück sowie einer an dem Verbindungskörper mittels eines als Kegelspitzgewinde ausgebildeten Kegelgewindes festgelegten Überwurfmutter im Zustand der Endmontage in einer teilweise geschnittenen Seitenansicht,
- Fig. 2: eine nicht unter den Schutzumfang des Anspruchs 1 fallende Ausführungsform des zur Verbindung von Verschraubungskörper und Überwurfmutter herangezogenen Kegelgewindes als sogenanntes Trapezgewinde in einer geschnittenen Seitenansicht,
- Fig. 3: das als Kegelspitzgewinde ausgebildete Gewindeprofil von am Verschraubungskörper angebrachten Außengewinde und in der Überwurfmutter befindlichen Innengewinde bei Eingriff in der Endmontagestellung gemäß Figur 1 in einer vergrößerten Seitenansicht,
- Fig. 4: das Trapezgewinde gemäß Figur 2 in einer Darstellung gemäß Figur 3, welches nicht unter den Schutzumfang des Anspruchs 1 fällt,
- Fig. 5: das für eine Selbsthemmung mittels unterschiedlicher Gewindesteigung von an Verschraubungskörper und Überwurfmutter angebrachte Trapezgewinde vor Erreichen der Montagestellung, welches nicht unter den Schutzumfang des Anspruchs 1 fällt,
- Fig. 6: das Trapezgewinde gemäß Figur 5 in der Montagestellung, welches nicht unter den Schutzumfang des Anspruchs 1 fällt,
- Fig. 7: das für eine Selbsthemmung mittels unterschiedlicher Öffnungswinkel der Zahnflanken von an Verschraubungskörper und Überwurfmutter eingerichtetem Trapezgewinde in der Montagestellung der Verbindungsvorrichtung, welches nicht unter den Schutzumfang des Anspruchs 1 fällt,
- Fig. 8: das für eine Selbsthemmung mittels unterschiedlicher Längen des an Verschraubungskörper und Überwurfmutter ausgebildeten Trapezgewindes eingerichtete Kegelgewinde vor Erreichen der Montagestellung, welches nicht unter den Schutzumfang des Anspruchs 1 fällt,
- Fig. 9: das Trapezgewinde gemäß Figur 8 in der Montagestellung der Verbindungsvorrichtung, welches nicht unter den Schutzumfang des Anspruchs fällt.

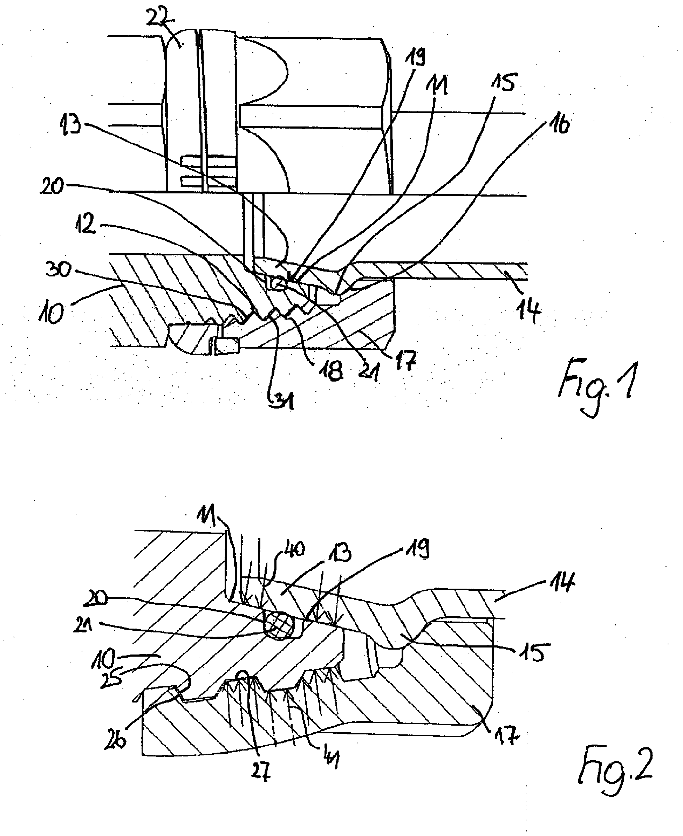

Die zunächst aus Figur 1 ersichtliche Verbindungsvorrichtung besteht aus einem Verschraubungskörper 10, der an seinem vorderen (rechten) Ende einen Aufnahmekonus 11 zur Aufnahme eines darin eingesteckten Endstücks 13 aufweist, wobei der Aufnahmekonus 11 die Form eines sich erweiternden Konus aufweist. Die im Bereich des Aufnahmekonus 11 liegende äußere Umfangsfläche 12 des Verschraubungskörpers weist eine in Richtung ihres vorderen Endes zum Konus des Aufnahmekonus 11 entgegengesetzten geneigten Verlauf auf, wobei an dieser Umfangsfläche 12 ein Außengewinde 30 ausgebildet ist.

Das in den Aufnahmekonus 11 des Verschraubungskörpers 10 eingesteckte Endstück 13 ist einstückiger Bestandteil eines Rohres 14, wobei mittels einer entsprechenden Umformung am Endstück 13 bzw. Rohr 14 eine Wulst 15 hergestellt ist. Die Wulst 15 bildet einerseits an ihrem dem Verschraubungskörper 10 abgewandten Ende eine Abstützfläche 16 für eine über das Rohr 14 geschobene Überwurfmutter 17 aus, und gleichzeitig ist die vordere Umfangsfläche des Endstücks 13 als konische Fläche 19 ausgebildet, die eine der Konizität des Aufnahmekonus 11 am Verschraubungskörper 10 entsprechende Konizität aufweist. Die über das Rohr 14 geschobene und sich an der Abstützfläche 16 der Rohrwulst 15 abstützende Überwurfmutter weist in ihrem Inneren eine sich konisch erweiternde Innenfläche 18 auf, an welcher ein Innengewinde 31 ausgebildet ist. Außengewinde 30 des Verschraubungskörpers 10 und Innengewinde 31 der Überwurfmutter 17 bilden aufgrund der übereinstimmend eingerichteten Konizität von Umfangsfläche 12 bzw. Innenfläche 18 gemeinsam ein Kegelgewinde mit einer entsprechenden Gewindesteigung aus. Bei dem in Figur 1 dargestellten Ausführungsbeispiel ist das Kegelgewinde als Kegelspitzgewinde ausgebildet.

Zur Abdichtung des Endstücks 13 gegen den Verschraubungskörper 10 ist an der inneren Umfangsfläche des Aufnahmekonus 11 eine Nut 20 mit einem darin eingelegten Dichtring 21 ausgebildet. Ferner ist auf dem äußeren Umfang des Verschraubungskörpers noch ein Anzeigering 22 dargestellt, mittels dessen der Montagezustand der Verbindungsvorrichtung erkennbar gemacht werden kann. Auf Ausbildung und Funktion des Anzeigeringes kommt es aber im Zusammenhang mit der vorliegenden Erfindung nicht an.

Es ist ersichtlich, dass es für die Verwirklichung der Erfindung darauf ankommt, dass in dem in den Aufnahmekonus 11 des Verschraubungskörpers 10 eingesteckten Bereich des Endstücks 13 eine konische Fläche zur Anlage an dem Aufnahmekonus 11 ausgebildet ist. In welcher konstruktiven Form diese konische Fläche im Einzelnen hergestellt oder ausgebildet ist, ist für die Verwirklichung der erfindungsgemäßen Verbindungsvorrichtung ohne Belang. Soweit in der vorstehend erläuterten Figur 1 die Ausbildung eines als Verschraubung eingesetzten Kegelgewindes als Kegelspitzgewinde dargestellt ist, fällt ein als Trapezgewinde ausgebildetes Kegelgewinde, welches in Figur 2 dargestellt ist, nicht unter den Schutzumfang des Anspruch 1.

Aus dem vorstehend beschriebenen Aufbau einer Verbindungsvorrichtung mit einem daran ausgebildeten Kegelgewinde ergibt sich schon der wesentliche Vorteil der Erfindung, wonach die Überwurfmutter 17 zunächst ohne eine Drehbewegung über die ersten Gewindegänge des an dem Verschraubungskörper 10 ausgebildeten Außengewindes 30 geschoben werden kann, wobei die Kegelgeometrie des Gewindes als Zentrierhilfe wirkt. Im Anschluss daran bedarf es nur weniger, etwa maximal zwei Umdrehungen, bevor ein Festziehen der Gewindeverbindung erfolgt. Weiterhin ist in Figur 2 der weitere Vorteil eines Aspekts der Erfindung verdeutlicht, wonach den bei der Endmontage der Verbindungsvorrichtung von dem in den Aufnahmekonus 11 des Verschraubungskörpers 10 eingeschobenen Endstück 13 radial auswärts ausgeübten Kräften (Pfeile 40) entsprechend von der Kegelverschraubung ausgehende radial nach Innen gerichtete Reaktionskräfte (Pfeile 41) gegenüberstehen, die zudem mit einer anwachsenden Verbindungskraft des Endstücks 13 im Verschraubungskörper 10 ebenfalls ansteigen.

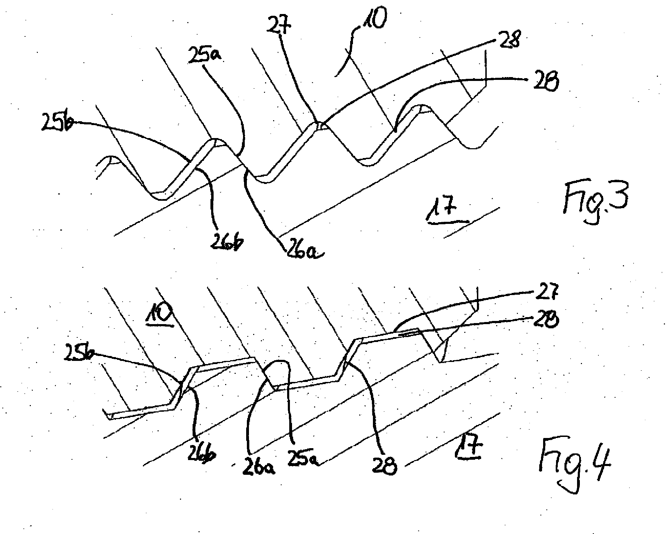

In den Figuren 3 und 4 ist die Ausbildung sowohl eines erfindungsgemäßen Kegelspitzgewindes als auch eines Trapezgewindes mit einem Überlastungsschutz bzw. einer Nachziehreserve darstellt. Hierzu sind die jeweiligen Gewindegänge von Innengewinde 31 der Überwurfmutter 17 und Außengewinde 30 des Verschraubungskörpers 10 konstruktiv so ausgestaltet, dass im Montagezustand die in Aufschraubrichtung gelegenen Zahnflanken 25a von Außengewinde 30 und Zahnflanken 26a von Innengewinde 31 aneinander anliegen, wobei an den gegenüberliegenden Zahnflanken 25b bzw. 26b wie auch im Gewindeganggrund 27 jeweils ein Spalt 28 verbleibt. Insbesondere dieser Spalt 28 bildet eine Nachziehreserve, die benötigt wird, soweit im Rahmen von Wiederholmontagen der Verbindungsvorrichtung die Überwurfmutter 17 um ein gewisses Maß weiter auf den Verschraubungskörper 10 aufgeschraubt wird.

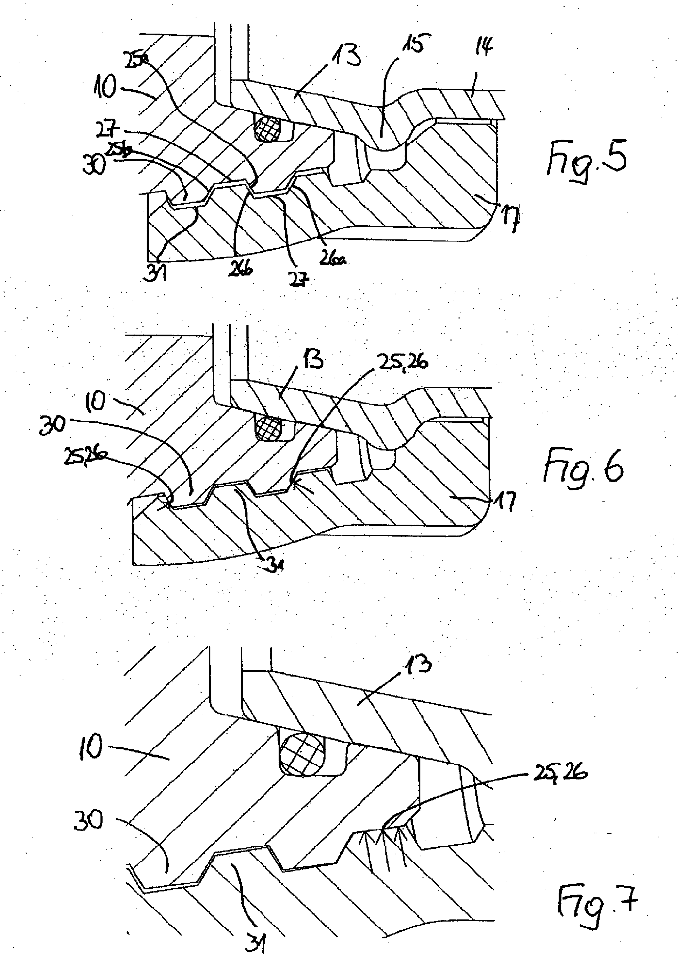

Die in den weiteren nachfolgend beschriebenen Figuren 5 bis 9 dargestellten Ausführungsbeispiele beziehen sich auf die Einrichtung einer Selbsthemmung bei dem eingesetzten Kegelgewinde, deren Verwirklichung anhand eines als Trapezgewinde ausgebildeten Kegelgewindes erläutert wird. Die entsprechend erläuterten konstruktiven Gestaltungen des Trapezgewindes lassen sich jedoch ebenso bei Kegelspitzgewinden ausbilden, ohne dass dies im Einzelnen dargestellt bzw. erläutert ist.

Bei dem in Figuren 5 und 6 dargestellten Ausführungsbeispiel ist die Selbsthemmung des an Verschraubungskörper 10 und Überwurfmutter 17 jeweils ausgebildeten Trapezgewindes dadurch verwirklicht, dass das am Verschraubungskörper 10 ausgebildete Außengewinde 30 und das in der Überwurfmutter 17 ausgebildete Innengewinde 31 jeweils eine voneinander abweichende Gewindesteigung aufweisen. Wie sich dazu aus Figur 6 ergibt, tritt bei einer am Verschraubungskörper ausgebildeten leicht größeren Gewindesteigung eine gewindehemmende Keilwirkung nur über den jeweils ersten und letzten Gewindegang ein. Die dazwischen liegenden Zahnflanken von Außengewinde 30 und Innengewinde 31 bleiben ohne Berührung.

Eine wiederum alternative Ausbildung der Selbsthemmung des beispielhaft dargestellten Trapezgewindes ergibt sich aus Figur 7. Erfindungsgemäß weisen Außengewinde 30 und Innengewinde 31 jeweils einen unterschiedlich großen Öffnungswinkel ihrer Zahnflanken 25a, 25b bzw. 26a, 26b auf. Wählt man für das an der Überwurfmutter 17 ausgebildete Innengewinde 31 einen Öffnungswinkel von beispielsweise 12° und für das am Verschraubungskörper 10 ausgebildete Außengewinde 30 einen Öffnungswinkel von 11°, so bewirkt dies eine Klemmung des jeweils auslaufenden Gewindes nur am in das Innere der Überwurfmutter 17 reichenden vorderen Ende des Verschraubungskörpers 10, da hier die mit unterschiedlichen Öffnungswinkeln ausgebildeten Gewindegänge ineinanderstoßen. Die weiteren Gewindegänge im Verlauf der hinteren Verschraubung bleiben ohne Berührung.

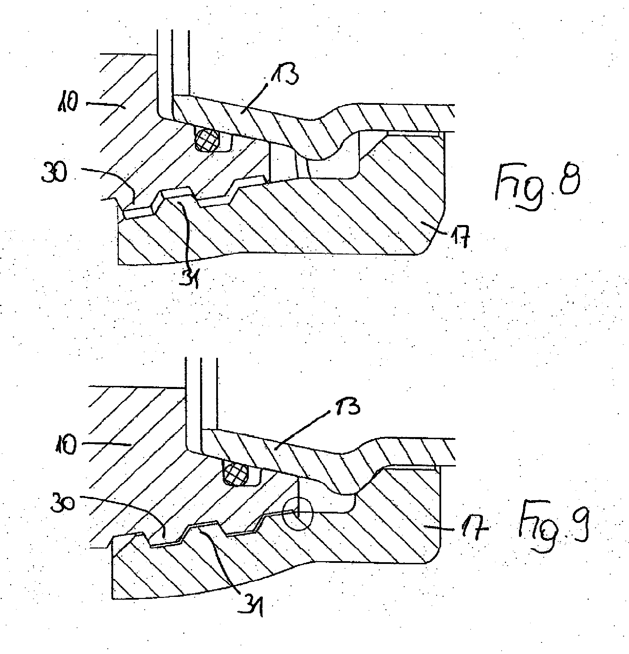

Bei dem schließlich in Figuren 8 und 9 dargestellten Ausführungsbeispiel wird die Selbsthemmung des dargestellten Trapezgewindes dadurch verwirklicht, dass das am Verschraubungskörper 10 angebrachte Außengewinde 30 eine größere axiale Länge aufweist, als das in der Überwurfmutter 17 ausgebildete Innengewinde 31. Somit findet bei Erreichen der Endmontagestellung ein partielles Ineinanderlaufen der Gewindegänge statt, welches zu einer Verformung und Klemmung bzw. Selbsthemmung der Bauteile gegeneinander führt.

## Patentansprüche

1. Verbindungsvorrichtung für Rohr- oder Schlauchleitungen mit einem eine Bohrung zur Durchleitung eines die Rohr- oder Schlauchleitung durchströmenden Mediums aufweisenden Verschraubungskörper (10) und mit einem in eine am vorderen Ende des Verschraubungskörpers (10) ausgebildete Aufnahme einsteckbaren und darin mittels einer ein auf ein auf dem Außenumfang des Verschraubungskörpers (10) angebrachtes Außengewinde (30) aufschraubbares Innengewinde (31) aufweisenden und zwischen einer Lösestellung und einer Montagestellung verdrehbar angeordneten Überwurfmutter (17) festlegbaren rohrähnlichen Endstück (13), wobei die Aufnahme des Verschraubungskörpers (10) in Form eines sich erweiternden Konus ausgebildet ist und wobei die das Außengewinde (30) tragende Umfangsfläche (12) des Verschraubungskörpers (10) in Richtung ihres vorderen Endes einen zum Konus der Aufnahme (11) entgegengesetzten geneigten Verlauf und die Überwurfmutter (17) mit ihrer das Innengewinde (31) tragenden Fläche (18) einen dazu komplementären Verlauf aufweisen und Außengewinde (30) und Innengewinde (31) als Kegelspitzgewinde ausgebildet sind derart, dass der bei montierter Verbindungsvorrichtung von dem konischen Endstück (13) auf den im Verschraubungskörper (10) ausgebildeten Aufnahmekonus (11) ausgeübten Radialkraft eine bei aufgeschraubter Überwurfmutter (17) vom Kegelgewinde ausgehende Radialkraft entgegengerichtet ist, **dadurch gekennzeichnet, dass** an der in die Aufnahme eingreifenden Umfangsfläche des Endstücks (13) eine dem am Verschraubungskörper (10) ausgebildeten Aufnahmekonus (11) entsprechende, sich zum Ende des Endstücks (13) verengende konische Gestaltung eingerichtet ist und die vordere, von dem Aufnahmekonus (11) des Verschraubungskörpers (10) aufgenommene konische Umfangsfläche (19) an einer durch Umformung des Endstücks (13) hergestellten Wulst (15) ausgebildet ist und dass die Geometrie der Zahnflanken (25, 26) des Kegelspitzgewindes derart ausgelegt ist, dass bei Erreichen einer durch ein vorgegebenes Anzugsdrehmoment definierten Montagestellung der Überwurfmutter (17) auf dem Verschraubungskörper (10) bei der Erstmontage zwischen den in Aufschraubrichtung gelegenen Zahnflanken (25b, 26b) von Außengewinde (30) und Innengewinde (31) sowie in dem jeweiligen Gewindeganggrund (27) jeweils ein Spalt (28) als Nachziehreserve des Kegelspitzgewindes verbleibt, wobei das dem Endmontagezustand der Verbindungsvorrichtung definierte Anzugsdrehmoment derart eingestellt ist, dass der zwischen dem inneren Aufnahmekonus (11) und der äußeren das Außengewinde (30) tragenden Fläche (12) liegende Endabschnitt des Verschraubungskörpers (10) elastisch nach innen in Richtung auf das in den Aufnahmekonus (11) eingeschobene Endstück (13) vorgespannt ist, wobei die Gewindegänge des am Verschraubungskörper (10) angebrachten Außengewindes (30) und des in der Überwurfmutter (17) ausgebildeten Innengewindes (31) einen unterschiedlichen Öffnungswinkel ihrer Zahnflanken (25, 26) aufweisen.

2. Verbindungsvorrichtung nach Anspruch 1, **dadurch gekennzeichnet, dass** die Zahnflanken (26) der Gewindegänge des in der Überwurfmutter (17) ausgebildeten Innengewindes (21) einen größeren Öffnungswinkel aufweisen als die Zahnflanken (25) der Gewindegänge des am Verschraubungskörper (10) ausgebildeten Außengewindes (30).

3. Verbindungsvorrichtung nach Anspruch 1 oder 2, **dadurch gekennzeichnet, dass** in der den konischen Bereich des Endstücks (13) aufnehmenden Innenfläche des Aufnahmekonus (11) des Verschraubungskörpers (10) eine Nut (20) mit einer darin angeordneten Dichtung (21) ausgebildet ist.

## Claims

1. A connecting device for pipe or hose lines with a threaded connecting body (10) having a bore for passing through a medium flowing through the pipe or hose line, and with a pipe-like end piece (13), which can be plugged into a receptacle constructed at the front end of the threaded connecting body (10) and fixed therein by means of a union nut (17), which has an internal thread (31) that can be screwed onto an external thread (30) applied on the outer circumference of the threaded connecting body (10) and is arranged rotatably between a release position and an assembly position, wherein the receptacle of the threaded connecting body (10) is constructed in the form of an expanding cone, and wherein the external thread (30) carrying the circumferential surface (12) of the threaded connecting body (10) has a progression inclined opposite the cone of the receptacle (11) in the direction of its front end, and the union nut (17) with its surface (18) carrying the internal thread (31) has a progression complementary thereto, and the external thread (30) and internal thread (31) are designed as apex threads, such that the radial force exerted on the receiving cone (11) formed in the threaded connecting body (10) by the conical end piece (13) with the connecting device assembled is directed opposite the radial force exerted by the tapered thread with the union nut (17) screwed on, **characterized in that** a conical shape that corresponds to the receiving cone (11) formed on the threaded connecting body (10) and tapers toward the end of the end piece (13) is established on the circumferential surface of the end piece (13) engaging into the receptacle, and the front conical circumferential surface (19) taken up by the receiving cone (11) of the threaded connecting body (10) is formed on a bead (15) fabricated by shaping the end piece (13), and that the geometry of the tooth flanks (25, 26) of the apex thread is configured in such a way that, once an assembly position of the union nut (17) on the threaded connecting body (10) defined by a prescribed tightening torque has been reached during initial assembly, a respective gap (28) remains as a retightening reserve of the apex thread between the tooth flanks (25b, 26b) of the external thread (30) and internal thread (31) lying in the screwing direction as well as in the respective thread root (27), wherein the tightening torque defined for the final assembly state of the connecting device is set in such a way that the end section of the threaded connecting body (10) lying between the inner receiving cone (11) and outer surface (12) carrying the external thread (30) is elastically inwardly pretensioned in the direction toward the end piece (13) pushed into the receiving cone (11), wherein the threads of the external thread (30) applied to the threaded connecting body (10) and the internal thread (31) formed in the union nut (17) have a different opening angle for their tooth flanks (25, 26).

2. The connecting device according to claim 1, **characterized in that** the tooth flanks (26) of the threads of the internal thread (21) formed in the union nut (17) have a larger opening angle than the tooth flanks (25) of the threads of the external thread (30) formed on the threaded connecting body (10) .

3. The connecting device according to claim 1 or 2, **characterized in that** a groove (20) with a gasket (21) arranged therein is formed in the inner surface of the receiving cone (11) of the threaded connecting body (10) that accommodates the conical area of the end piece (13).

## Revendications

1. Dispositif de raccordement pour conduites ou canalisations, comportant un corps de vissage (10) présentant un embout (13) de type tubulaire pour le passage d'un fluide passant à travers la conduite ou la canalisation et un embout de type tubulaire (13) pouvant être fixé dans un taraudage (31) dans un récepteur conformé à l'extrémité avant du corps de vissage (10) et pouvant être vissé dedans au moyen d'un taraudage (31) pouvant être vissé dedans au moyen d'un filetage (30) réalisé sur la circonférence extérieure du corps de vissage (10) et un écrou chapeau (17) disposé de manière à pouvoir tourner entre une position de desserrage et une position de montage, le récepteur du corps de vissage (10) étant réalisé sous la forme d'un cône s'évasant et la surface circonférentielle (12) portant le filetage (30) du corps de vissage (10) présentant en direction de son extrémité avant une orientation inclinée opposée au cône du récepteur (11) et l'écrou chapeau (17) présentant avec sa surface (18) portant le taraudage (31) une orientation complémentaire à celle-ci, et le filetage (30) et le taraudage (31) étant réalisés sous forme d'un filetage à pointe conique de manière à ce que la force radiale partant du filetage conique lorsque le dispositif de raccordement est raccordé, par l'embout conique (13) sur le cône récepteur (11) réalisé dans le corps de vissage (10) soit dirigée en sens opposé de la force radiale exercée sur le cône récepteur (11) réalisé dans le corps de vissage (10) lorsque l'écrou chapeau est vissé (17), **caractérisé en ce que**, au niveau de la surface circonférentielle empiétant sur le récepteur de l'embout (13), une conformation conique se rétrécissant correspondant au cône récepteur (11) réalisé au niveau du corps de vissage (10) est établie et que la surface circonférentielle conique avant (19) reçue par le cône récepteur (11) du corps de vissage (10) est réalisée au niveau d'un bourrelet (15) réalisé par déformation de l'embout (13) et que la géométrie des flancs des dents (25,26) du filetage à pointe conique est conçue de manière à ce que, à l'atteinte d'une position de montage définie par un couple de serrage prédéfini de l'écrou chapeau (17), il reste sur le corps de vissage (10), lors du montage initial entre les flancs des dents (25b, 26b) situés dans le sens de vissage du filetage (30) et du taraudage (31), de même que dans la base respective du pas de filetage (27), respectivement un intervalle (28) faisant office de réserve de serrage du filetage à pointe conique, le couple de serrage défini pour l'état de montage final du dispositif de raccordement étant réglé de manière à ce que la section terminale se trouvant entre le cône récepteur intérieur (11) et la surface (12) portant l'extérieur du filetage (30) du corps de vissage (10) soit précontrainte élastiquement vers l'intérieur en direction de l'embout (13) glissé dans le cône récepteur (11), les pas de filetage du filetage (30) réalisé au niveau du corps de vissage (10) et du taraudage (31) réalisé dans l'écrou chapeau (17) présentant un angle d'ouverture différent de leurs flancs de dents (25,26).

2. Dispositif de raccordement selon la revendication 1, **caractérisé en ce que** les flancs des dents (26) des pas de filetage du taraudage (21) réalisé dans l'écrou chapeau (17) présentent un plus grand angle d'ouverture que les flancs des dents (25) des pas de filetage du filetage (30) réalisé au niveau du corps de vissage (10).

3. Dispositif de raccordement selon la revendication 1 ou 2, **caractérisé en ce que**, dans la surface intérieure recevant la partie conique de l'embout (13) du cône récepteur (11) du corps de vissage (10), une rainure (20) dans laquelle est disposé un joint (21) est réalisée.
